# EUROPEAN PATENT SPECIFICATION

(11) **EP 0 601 885 B1**
(45) Date of publication and mention of the grant of the patent: **03.06.1998**
(21) Application number: 93309999.6
(22) Date of filing: 10.12.1993
(51) Int. Cl.: C08G 63/08, C08G 63/664, C08G 63/85

(54) **Biodegradable optically active polymer of lactones and process for production thereof**
Biologisch abbaubares, optisch aktives Lactonpolymer und Verfahren zu seiner Herstellung
Polymère biodégradable optiquement actif de lactones et son procédé de production

(30) Priority: 11.12.1992 JP 353170/92; 26.03.1993 JP 90548/93
(43) Date of publication of application: 15.06.1994
(73) Proprietor: Takasago International Corporation, Tokyo 108 (JP)
(72) Inventor: Hori, Yoji, c/o Takasago Int. Corporation, Hiratsuka-shi, Kanagawa (JP); Yamaguchi, Akio, c/o Takasago Int. Corporation, Hiratsuka-shi, Kanagawa (JP)
(74) Representative: Dixon, Donald Cossar

(56) References cited:
- EP-A- 0 509 203
- EP-A- 0 522 422
- US-A- 4 876 331
- JOURNAL OF ORGANOMETALLIC CHEMISTRY, vol. 341, no. 1-3, March 1988; N.C. BILLINGHAM et al., pp. 83-93
- MACROMOLECULES, vol. 23, no. 13, June 1990; Y. ZHANG et al., pp. 3206-3212

## Description

The present invention relates to a novel biodegradable, optically active polymer and a process for producing the same. More particularly, this invention relates to a novel optically active polyester obtained by the ring-opening copolymerization of optically active (R)-β-butyrolactone with one of various other lactones, and to a process for producing the polymer.

The polymer of the present invention is a thermoplastic resin having optical activity, biodegradability and hydrolyzability, and is hence a functional polymer that can be extensively utilized as a clean plastics material not causing environmental pollution because it is degraded by microorganisms present in soils or waters.

The polymer of the present invention is also utilizable as a medical material, especially as sutures for use in surgical operations.

Known in recent years is a microorganism which accumulates a polymer of (R)-3-hydroxybutyric acid (hereinafter abbreviated as (R)-3-HB) within the cells thereof; that polymer corresponds to one of the moieties constituting the compound of the present invention. It is also known that there are a large number of microorganisms which accumulate within the cells thereof various kinds of (R)-3-hydroxyalkanoic acid units (hereinafter abbreviated as (R)-3-HA) (see P.A. Holmes, Phys. Technol., 1985, (16), p. 32 and Seibunkaisei Kobunshi Zairyo (Biodegrable Polymeric Materials), p. 26, written by Yoshiharu Doi, published by Kogyo Chosa Kai, 1990.)

Further, a polymer having (R) -3-HB and a 4-hydroxybutyric acid unit (hereinafter abbreviated as 4-HB) had not been produced until it was synthesized by means of a microorganism (see Polym. Commun., 29, 174 (1988)). Since these polymers have such properties as biodegradability or enzymatic degradability, hydrolyzability, and compatibility with the living body, they are attracting attention as a new type of functional materials (see Seibunkaisei Kobunshi Zairyo, p. 19, written by Yoshiharu Doi, published by Kogyo Chosa Kai, 1990 and JP-A-4-292619). (The term "JP-A" as used herein means an unexamined published Japanese patent application.)

These microbial methods for polymer synthesis are disadvantageous in that since the methods utilize a microorganism or an enzymatic reaction, a troublesome step is needed, for example, to separate the polymer from the living cells, and that the cost of production is high.

In addition, most of the polymers thus produced contain an (R)-3-HA unit and a 4-HB unit, and only one polymer has been reported which contains a 5-hydroxyvaleric acid unit (Makromol. Chem., Rapid Commun., 8, 631 (1987)).

On the other hand, the ring-opening polymerization of optically active β-butyrolactone has been reported in Polymer Letters, 9, 173 (1970), Macromolecules, 23, 3206 (1990), and Macromolecules, 24, 5732 (1991). However, ring-opening copolymerization of the lactone with another lactone has been unknown so far.

With respect to the ring-opening copolymerization of racemic β-butyrolactone with δ-valerolactone or ε-caprolactone, there is a report in J. Organomet. Chem., 341, p.83 (1988).

A low-molecular-weight polymer obtained by the condensation polymerization of racemic 3-HB with lactic acid has been reported in U.S. Patent 3,579,549.

However, the production of a biodegradable polymer by the ring-opening polymerization of (R)-β-butyrolactone has many problems from an industrial standpoint. Specifically, there are no simple methods for synthesizing optically active (R)-β-butyrolactone, i.e., the monomer. Further, as compared with microbial polymerization methods, the ring-opening polymerization method is defective in that the molecular weight is low and the catalytic activity is also low, resulting in high production cost.

Accordingly, an object of the present invention is to provide a novel, biodegradable, optically active polymer which is a high-molecular-weight polymer containing an (R)-3-HB unit and having excellent biodegradability and hydrolyzability, and to provide an industrially advantageous process for producing the polymer.

We have made intensive studies in order to overcome the above-described problems. As a result, it has been found that optically active β-butyrolactone readily undergoes ring-opening copolymerization with various kinds of lactones in the presence of a high-activity catalyst to give corresponding, optically active polyesters having high molecular weights. The present invention has been completed based on this finding.

The present invention provides a biodegradable, optically active polymer represented by general formula (I): 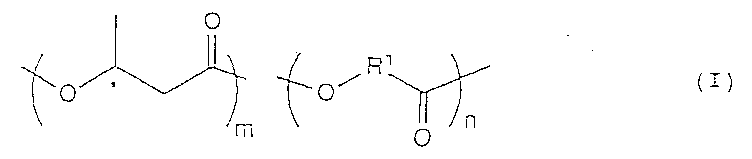 wherein R¹ represents a group selected from tetramethylene, methyltetramethylene, pentamethylene, -CH(CH₃)-O-C(=O)-CH(CH₃)-[hereinafter referred to as 1,4-dimethyl-2-oxo-3-oxytetramethylene], -CH₂-O-C(=O)-CH₂- [hereinafter referred to as 2-oxo-3-oxytetramethylene], and -CH₂-CH(CH₃)-O-CH₂-CH₂- [hereinafter referred to as 2-methyl-3-oxypentamethylene], and m and n each represents a natural number of from 10 to 15,000.

In a preferred aspect of the present invention, the polymer which comprises the structural units represented by the general formulae (III) and (V): 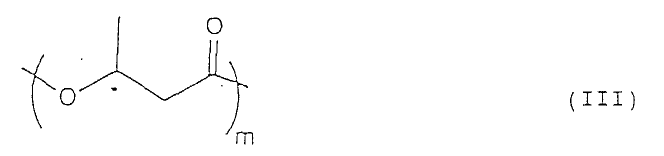 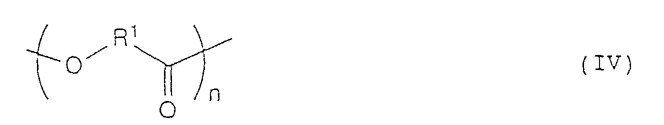 has a ratio of the structural units (III) to the units (IV) in the range of from 99:1 to 1:99; the weight-average molecular weight of the polymer is preferably from 8,000 to 1,000,000.

The present invention further provides a process for producing the biodegradable, optically active polymer, which comprises subjecting optically active β-butyrolactone and a six- or seven-membered lactone to ring-opening copolymerization in the presence of a catalyst.

The catalyst preferably is selected from a tin compound, an aluminum compound, a zinc compound and a distannoxane catalyst.

It is more preferred that the catalyst be a distannoxane catalyst represented by general formula (II) : 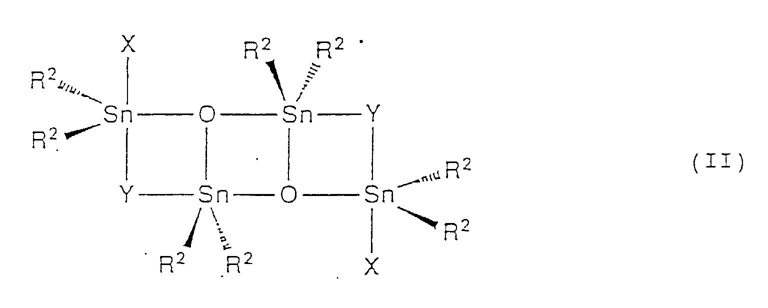 wherein R² represents either an alkyl group having from 1 to 4 carbon atoms or a phenyl group, X is selected from Cl, Br, and NCS, and Y is selected from Cl, Br, NCS, OH, an alkoxy group having from 1 to 4 carbon atoms, and a phenoxy group.

The optically active β-butyrolactone to be used as one of the raw materials for the polymer of the present invention can be easily obtained by the method disclosed in Japanese Patent Application with the priority No. 4-210683 (EP-A-0580336). In this method, a diketene of the formula (V): 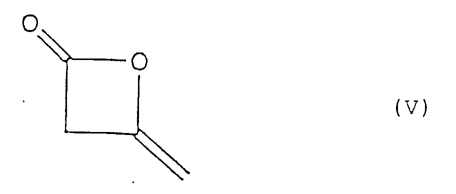 is subjected to asymmetric hydrogenation using a ruthenium-optically active phosphine complex as catalyst. The ruthenium-optically active phosphine complex can be obtained by the processes as disclosed, for example, in JP-A-61-63690, JP-A-64-68386, JP-A-63-135397, JP-A-63-41487, JP-A-63-145292, JP-A-2-191289, JP-A-62-265293, T.Ikariya et al., J. Chem. Soc., Chem. Commun., pp. 922-924 (1985), and J.P.Genet et al., Tetrahedron: Asymmetry, Vol. 2, No. 7, pp. 555-567 (1991).

Examples of the six- or seven-membered lactone to be used as the other raw material for the polymer of the present invention include glycolide, L-lactide, DL-lactide, δ-valerolactone, β-methyl-δ-valerolactone, ε-caprolactone, and optically active 7-methyl-1,4-dioxepan-5-one.

In the present invention, at least one of such six- or seven-membered lactones is used; if required, two or more thereof may be used in combination.

As the six- or seven-membered lactone, one prepared by purifying a commercially available product may be used. For example, a six- or seven-membered lactone product on the market is purified by subjecting it twice to a purification operation comprising addition of calcium hydride, followed by distillation, and the purified lactone is stored in an inert gas until use.

The proportion of the optically active β-butyrolactone to the other lactone to be subjected to ring-opening copolymerization in the present invention is such that the ratio of the former to the latter is in the range of from 99:1 to 1:99 by mol%. Higher proportions of the optically active β-butyrolactone are preferred in that the higher the proportion of the optically active β-butyrolactone to the other lactone, the more the polymer to be produced is biodegradable.

The ring-opening copolymerization may be carried out by a method in which optically active β-butyrolactone and the other lactone in a suitable proportion within the above-specified range are introduced into a reaction vessel in an inert gas, such as nitrogen or argon, subsequently the catalyst that will be described below is added thereto, and the monomers are then allowed to react at a temperature of from 60 to 100°C under ordinary pressure for from 1 hour to 3 days, thereby to obtain a random copolymer.

The catalyst to be used in the polymerization reaction may be a tin compound catalyst, aluminum compound catalyst, zinc compound catalyst or distannoxane catalyst.

Examples of the tin compound catalyst include dibutyltin oxide, tin dioctylate, and dibutyltin dilaurate. Examples of the aluminum compound catalyst include triethylaluminum-water, methylalumoxane, ethylalumoxane, aluminum trimethoxide, aluminum triethoxide, aluminum triisopropoxide, and aluminum triphenoxide. Examples of the zinc compound catalyst include diethylzinc-water, diethylzincethylene glycol, diethylzinc-methanol, and diethylzinc-ethanol.

Examples of the distannoxane catalyst of formula (II) given hereinabove include 1,3-dichlorotetrabutyldistannoxane, 1,3-dichlorotetraphenyldistannoxane, 1,3-dibromotetrabutyldistannoxane, 1-hydroxy-3-chlorotetrabutyldistannoxane, 1-hydroxy-3-bromotetrabutyldistannoxane, 1-hydroxy-3-(isothiocyanato)tetrabutyldistannoxane, 1-ethoxy-3-chlorotetrabutyldistannoxane, 1-phenoxy-3-chlorotetrabutyldistannoxane, 1-phenoxy-3-bromotetrabutyl-distannoxane, 1-methoxy-3-(isothiocyanato)tetrabutyldistannoxane,1-phenoxy-3-(isothiocyanato)tetrabutyldistannoxane, 1,3-bis(isothiocyanato)tetrabutyldistannoxane, and 1,3-bis(isothiocyanato)tetramethyldistannoxane.

At least one of such catalysts is used; if required, two or more thereof may be used in combination.

The amount of the catalyst to be added may be from 1/100 to 1/40,000 mole per mole, preferably from 1/1,000 to 1/5,000 mole per mole, of that of the β-butyrolactone as one of the raw-material monomers.

Of the catalysts enumerated above, 1,3-dichlorotetrabutyldistannoxane, for example, can be easily synthesized by the method described in J. Organomet. Chem., 3, p.70, (1965). Further, 1-hydroxy-3-(isothiocyanato)tetrabutyldistannoxane can be easily synthesized by reacting dibutyltin oxide with dibutyltin isothiocyanate in ethanol as described in J. Org. Chem., 56, p.5307, (1991).

The present invention will be explained below in more detail with reference to the following Examples, Test Examples, and others.

In the Examples, Test Examples, and others given below, the following analytical instruments and biodegradability testing devices were used.
1) Nuclear magnetic resonance spectrum (NMR): Type AM-400 (400 MHz) (manufactured by Bruker, Inc.)
2) Molecular weight: D-2520 GPC Integrator (manufactured by Hitachi Ltd., Japan)
3) Optical rotation: Digital Polarimeter, Type DIP-360 (manufactured by JASCO Inc., Japan)
4) Differential scanning calorimeter (DSC): DSC 50 (manufactured by Shimadzu Corp., Japan)
5) Thermogravimetric analyzer (TGA): TGA 50 (manufactured by Shimadzu Corp.)
6) Biodegradability test: Using an activated sludge (purchased from Chemicals Inspection & Testing Institute, Japan on October 22, 1992), biodegradability was examined in accordance with "Test of Degradation of Chemical Substances by Microorganisms etc." as provided for in "Test Methods for Novel Chemical Substances" (Kanpogyo: Bureau certified No. 5, Yakuho: Bureau certified No. 615, 49 Kikyoku: Bureau certified No. 392, July 13, 1974) and with the related description in Y. Doi, A. Segawa, and M. Kunioka, Int. J. Biol. Macromol., 1990, Vol.12, April, 106.

Data for the copolymers synthesized in the following Examples and Comparative Example are summarized in Table 1, which data include those on monomer unit proportion in each copolymer, weight-average molecular weight (M_{w}), number-average molecular weight (Mₙ), glass transition point (T_{g}), melting point (Tₘ), decomposition temperature, and specific rotation.

### EXAMPLE 1

### Synthesis of Polyester from (R)-(β-butyrolactone (hereinafter abbreviated as (R)-βBL) and ε-caprolactone (hereinafter abbreviated as εCL) by ring-opening copolymerization

### Synthesis of (R)-βBL

17.1Milligrams (0.01 mmol) of Ru₂Cl₄((-)-Tol-BINAP)₂NEt₃ [wherein Tol-BINAP represents 2,2'-bis{di(p-tolyl)phosphino}-1,1'-binaphthyl] was precisely weighed out and placed in a 100-ml stainless-steel autoclave in a nitrogen atmosphere, and 10 ml of tetrahydrofuran was added thereto to dissolve it. To this solution was added 2.42 mg (0.02 mmol) of dimethylaniline. This mixture was stirred at 50°C for 20 minutes. Subsequently, 1.7 g (20 mmol) of diketene was introduced into the autoclave and the resulting mixture was stirred at a reaction temperature of 60°C for 60 hours at a hydrogen pressure of 100 Kg/cm². The reaction mixture was distilled, thereby obtaining 1.64 g (yield 95%) of a fraction having a boiling point of 71-73°C at 29 mmHg. The optical purity of this reaction product was determined by subjecting the product to solvolysis in methanol (methanolysis), subsequently converting the solvolysis product to its ester with methoxytrifluoromethylphenylacetic acid, and then subjecting the ester to ¹H-NMR analysis. From the thus-obtained diastereomer proportion value, the optical purity was determined to be 91%ee.

Into a 20-ml reaction vessel were introduced 0.78 g (9.0 mmol) of (R)-βBL, 0.11 g (1.0 mmol) of εCL, and 0.0056 g (0.005 mmol) of 1-ethoxy-3-chlorotetrabutyldistannoxane. This mixture was stirred at 100°C for 2 hours in an Argon (hereinafter referred to as Ar) atmosphere. The reaction product was dissolved in chloroform and this solution was poured into a mixed solvent consisting of methanol, diethyl ether and hexane, thereby to reprecipitate the reaction product. Thus, the title polymer was obtained in an amount of 0.60 g (yield 67.5%).
¹H-NMR (400 MHz, CDCl₃) δppm:
(R)-βBL moiety:
1.18-1.32 (3H, m), 2.41-2.53 (1H, m),
2.55-2.68 (1H, m), 5.18-5.32 (1H, m)
εCL moiety:
1.32-1.45 (2H, m), 1.56-1.70 (4H, m),
2.22-2.35 (2H, m), 4.01-4.10 (2H, m)

### EXAMPLE 2

### Synthesis of polyester from (R)-βBL and εCL by ring-opening copolymerization

Reaction was conducted in the same manner as in Example 1 except that 0.69 g (8.0 mmol) of (R)-βBL, 0.23 g (2.0 mmol) of εCL,, and 0.0053 g (0.005 mmol) of 1-hydroxy-3-chlorotetrabutyldistannoxane were used. As a result, the title polymer was obtained in an amount of 0.70 g (yield 76.3%).

### EXAMPLE 3

### Synthesis of Polyester from (R)-βBL and εCL by ring-opening copolymerization

Reaction was conducted in the same manner as in Example 1 except that 0.69 g (8.0 mmol) of (R)-βBL, 0.23 g (2.0 mmol) of εCL , and 0.0056 g (0.005 mmol) of 1-hydroxy-3-(isothiocyanato)tetrabutyldistannoxane were used. As a result, the title polymer was obtained in an amount of 0.66 g (yield 71.9%).

### EXAMPLE 4

### Synthesis of polyester from (R)-βBL and δ-valerolactone hereinafter abbreviated as δVL) by ring-opening copolymerization

Reaction was conducted in the same manner as in Example 1 except that 0.78 g (9.0 mmol) of (R)-βBL and 0.10 g (1.0 mmol) of δVL were used. As a result, the title polymer was obtained in an amount of 0.77 g (yield 88.0%).
¹H-NMR (400 MHz, CDCl₃) δppm:
(R)-βBL moiety:
1.20-1.32 (3H, m), 2.40-2.52 (1H, m),
2.53-2.68 (1H, m), 5.18-5.32 (1H, m)
δVL moiety:
1.62-1.71 (2H, m), 2.26-2.34 (4H, m),
4.03-4.12 (2H, m)

### EXAMPLE 5

### Synthesis of polyester from (R)-βBL and β-methyl-δ-valerolactone (hereinafter abbreviated as β-Me-δVL) by ring-onening copolymerization

Reaction was conducted in the same manner as in Example 1 except that 0.78 g (9.0 mmol) of (R)-βBL and 0.11 g (1.0 mmol) of β-Me-δVL were used. As a result, the title polymer was obtained in an amount of 0.65 g (yield 73.1%).
¹H-NMR (400 MHz, CDCl₃) δppm:
(R)-βBL moiety:
1.20-1.32 (3H, m), 2.40-2.53 (1H, m),
2.54-2.68 (1H, m), 5.18-5.32 (1H, m)
β-Me-δVL moiety:
0.97 (3H, d, J=6.5 Hz), 1.45-1.58 (1H, m),
1.62-1.75 (1H, m), 2.00-2.18 (2H, m),
2.25-2.35 (1H, m), 4.06-4.17 (2H, m)

### EXAMPLE 6

### Synthesis of polyester from (R)-βBL and L-lactide (hereinafter abbreviated as L-LA) by ring-opening copolymerization

Reaction was conducted in the same manner as in Example 1 except that 0.78 g (9.0 mmol) of (R)-βBL and 0.14 g (1.0 mmol) of L-LA were used. As a result, the title polymer was obtained in an amount of 0.66 g (yield 72.1%).
¹H-NMR (400 MHz, CDCl₃) δppm:
(R)-βBL moiety:
1.20-1.34 (3H, m), 2.42-2.80 (2H, m),
5.20-5.35 (1H, m)
L-LA moiety
1.40-1.60 (3H, m), 5.02-5.20 (2H, m)

### EXAMPLE 7

### Synthesis of polyester from (R)-βBL and L-LA by ring-opening copolymerization

Reaction was conducted in the same manner as in Example 1 except that 0.60 g (7.0 mmol) of (R)-βBL and 0.43 g (3.0 mmol) of L-LA were used. As a result, the title polymer was obtained in an amount of 0.68 g (yield 65.8%).

### EXAMPLE 8

### Synthesis of polyester from (R)-βBL and glycolide (hereinafter abbreviated as GL) by ring-opening copolymerization

Reaction was conducted in the same manner as in Example 1 except that 1.38 g (16.0 mmol) of (R)-βBL and 0.46 g (4.0 mmol) of GL were used. The reaction product was dissolved in chloroform and the insoluble matter was filtered out. The resulting filtrate was poured into a mixed solvent consisting of diethyl ether and hexane, thereby to reprecipitate the reaction product. Thus, the title polymer was obtained in an amount of 0.59 g (yield 32.1%).
¹H-NMR (400 MHz, CDCl₃) δppm:
(R)-βBL moiety:
1.21-1.41 (3H, m), 2.40-2.82 (2H, m),
5.20-5.43 (1H, m)
GL moiety:
4.53-4.62 (2H, m)

### EXAMPLE 9

### Synthesis of polyester from (R)-βBL and εCL by ring-opening copolymerization

Reaction was conducted in the same manner as in Example 1 except that 0.69 g (8.0 mmol) of (R)-βBL, 0.23 g (2.0 mmol) of εCL, and 0.0050 g (0.02 mmol) of dibutyltin oxide were used. As a result, the title polymer was obtained in an amount of 0.70 g (yield 76.3%).

### EXAMPLE 10

### Synthesis of poly(ester ether) from (R)-βBL and (R)-7-methyl-1,4-dioxepan-5-one ((R)-MDO) by ring-opening copolymerization

Reaction was conducted in the same manner as in Example 1 except that 2.58 g (30 mmol) of (R)-βBL, 1.30 g (10 mmol) of (R)-MDO, and 0.0056 g (0.005 mmol) of 1-ethoxy-3-chlorotetrabutyldistannoxane were used. As a result, the title polymer was obtained in an amount of 3.44 g (yield 88.6%).

### EXAMPLE 11

### Synthesis of poly(ester ether) from (R)-βBL and (R)-MDO by ring-opening copolymerization

Reaction was conducted in the same manner as in Example 1 except that 3.18 g (37 mmol) of (R)-βBL, 0.60 g (4.6 mmol) of (R)-MDO, and 0.0056 g (0.005 mmol) of 1-ethoxy-3-chlorotetrabutyldistannoxane were used. As a result, the title polymer was obtained in an amount of 3.56 g (yield 94.2%).

### COMPARATIVE EXAMPLE 1

### Synthesis of polyester from racemic βBL and εCL by ring-opening copolymerization

Reaction was conducted in the same manner as in Example 1 except that 6.20 g (72.0 mmol) of racemic βBL, 0.91 g (2.0 mmol) of εCL, and 0.0225 g (0.02 mmol) of 1-ethoxy-3-chlorotetrabutyldistannoxane were used. As a result, the title polymer was obtained in an amount of 6.50 g (yield 91.4%).

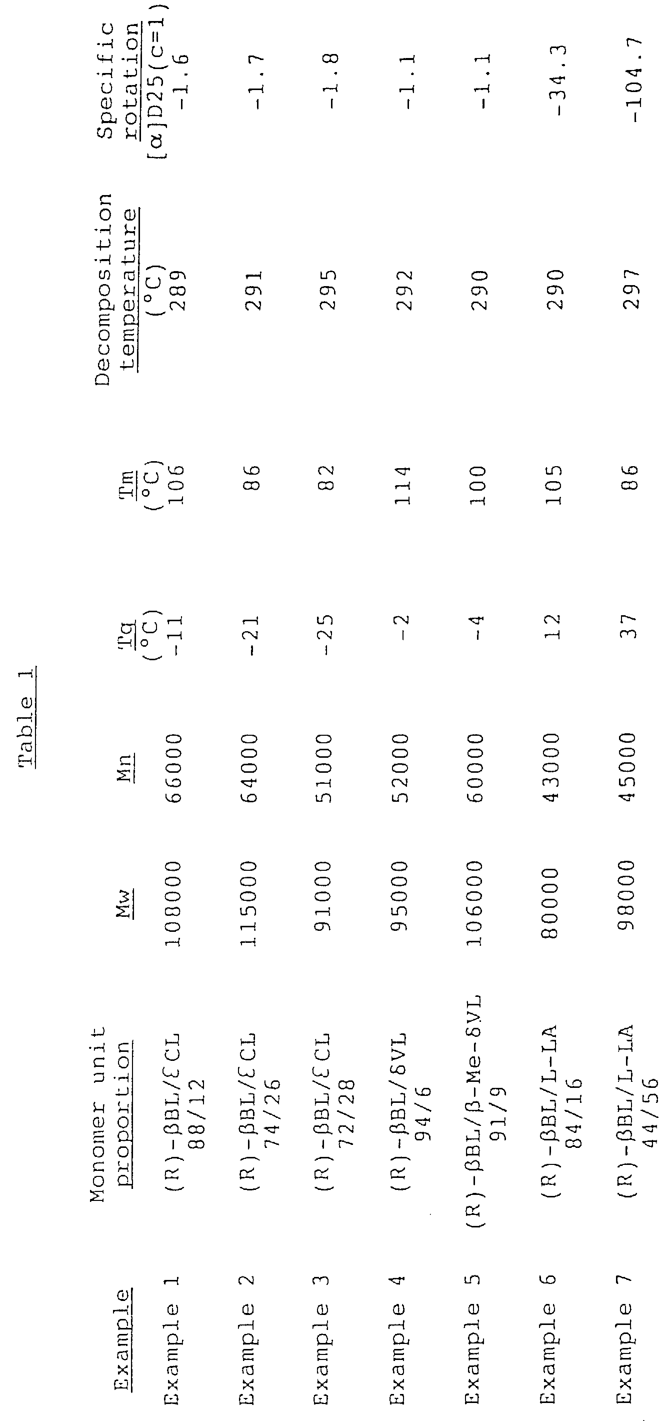

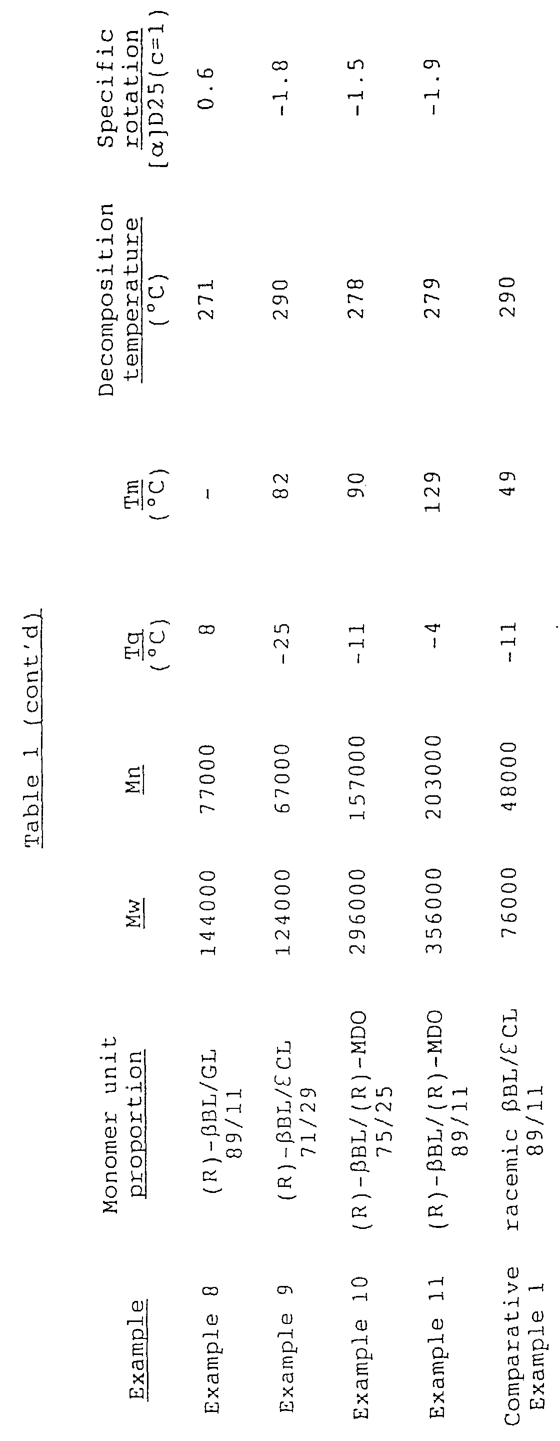

### TEST EXAMPLE 1

### Biodegradability test for the polymer of Example 1

An activated sludge (purchased from Chemicals Inspection & Testing Institute, Japan on October 22, 1992) was used in this test under conditions of 500 ppm (600 ml), pH 6.0-7.0, and 30°C. The activated sludge and a thin polymer film which had been formed from the polymer obtained in Example 1 (by dissolving the polymer in chloroform, casting the solution into a laboratory dish or the like, and evaporating the solvent) and which had dimensions of 1 cm by 2 cm with a thickness of 0.05-0.1 mm and weighed 26-32 mg were placed in a 50-ml flask, and the test was conducted using a shaking-type thermostatic water bath manufactured by TAITEC, Japan.

After the lapse of each of one week and two weeks, the weight of the polymer was measured to determine the percentage of residual weight.

The results obtained are given in Table 2. The results show that 100% of the polymer film obtained from the polymer of Example 1 had been degraded in one week and in two weeks.

### TEST EXAMPLE 2

### Biodegradability test for the polymer of Example 3

The polymer obtained in Example 3 was subjected to a biodegradability test in the same manner as in Test Example 1.

The results obtained are given in Table 2, which show that 100% of the polymer film had been degraded in one week and in two weeks.

### TEST EXAMPLE 3

### Biodegradability test for the polymer of Example 4

The polymer obtained in Example 4 was subjected to a biodegradability test in the same manner as in Test Example 1.

The results obtained are given in Table 2, which show that 100% of the polymer film had been degraded in one week and in two weeks.

### TEST EXAMPLE 4

### Biodegradability test for the polymer of Example 5

The polymer obtained in Example 5 was subjected to a biodegradability test in the same manner as in Test Example 1.

The results obtained are given in Table 2, which show that 100% of the polymer film had been degraded in one week and in two weeks.

### TEST EXAMPLE 5

### Biodegradability test for the polymer of Example 6

The polymer obtained in Example 6 was subjected to a biodegradability test in the same manner as in Test Example 1.

The results obtained are given in Table 2, which show that 57% and 100% of the polymer film had been degraded in one week and in two weeks, respectively.

### TEST EXAMPLE 6

### Biodegradability test for the polymer of Example 10

The polymer obtained in Example 10 was subjected to a biodegradability test in the same manner as in Test Example 1.

The results obtained are given in Table 2, which show that 54% and 100% of the polymer film had been degraded in one week and in two weeks, respectively.

### COMPARATIVE TEST EXAMPLE 1

### Biodegradability test for the polymer of Comparative Example 1

The polymer obtained in Comparative Example 1 (copolymer of racemic βBL and εCL) was subjected to a biodegradability test in the same manner as in Test Example 1.

The results obtained are given in Table 2, which show that 3% and 4% of the polymer film had been degraded in one week and in two weeks, respectively.

**Table 2**

| Percentage of the residual weight of polymer before biodegradability test, after 1 week, and after 2 weeks in Test Examples 1 to 5 and Comparative Test Example 1 | | | |
|---|---|---|---|
| | Percentage of Residual Weight (%) | | |
| | Before test | After 1 week | After 2 weeks |
| Test Example 1 | 100 | 0 | 0 |
| Test Example 2 | 100 | 0 | 0 |
| Test Example 3 | 100 | 0 | 0 |
| Test Example 4 | 100 | 0 | 0 |
| Test Example 5 | 100 | 43 | 0 |
| Test Example 6 | 100 | 46 | 0 |
| Comparative Test Example 1 | 100 | 97 | 96 |

According to the present invention, useful polymers which are a new type of functional materials characterized as having optical activity, biodegradability (enzymatic degradability) and hydrolyzability can be easily produced in an industrially advantageous manner by the ring-opening copolymerization of optically active β-butyrolactone with various lactones.

## Claims

1. A biodegradable, optically active random copolymer represented by the general formula (I): 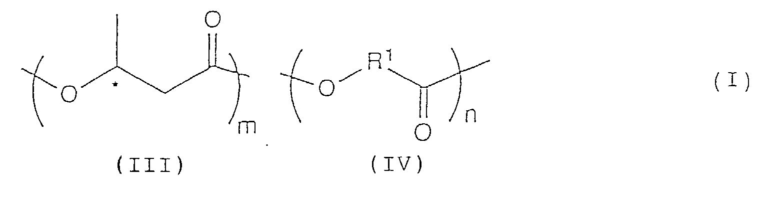 wherein R¹ represents a group selected from tetramethylene, methyltetramethylene, pentamethylene, 1,4-dimethyl-2-oxo-3-oxytetramethylene, 2-oxo-3-oxytetramethylene, and 2-methyl-3-oxypentamethylene, and m and n each represents a natural number of from 10 to 15,000.

2. A biodegradable, optically active polymer as claimed in Claim 1, wherein the ratio of the structural units (III) to the structural units (IV) is in the range of from 99:1 to 1:99.

3. A biodegrable, optically active polymer as claimed in Claim 1 or 2, which has a weight-average molecular weight of from 8,000 to 1,000,000.

4. A process for producing the biodegradable, optically active polymer as claimed in Claim 1, 2 or 3, which comprises subjecting optically active β-butyrolactone and a six- or seven-membered lactone to ring-opening copolymerization in the presence of a catalyst.

5. A process as claimed in Claim 4, wherein the catalyst is selected from a tin compound, an aluminum compound, a zinc compound and a distannoxane catalyst.

6. A process as claimed in Claim 5, wherein the catalyst is a distannoxane catalyst represented by general formula (II) : 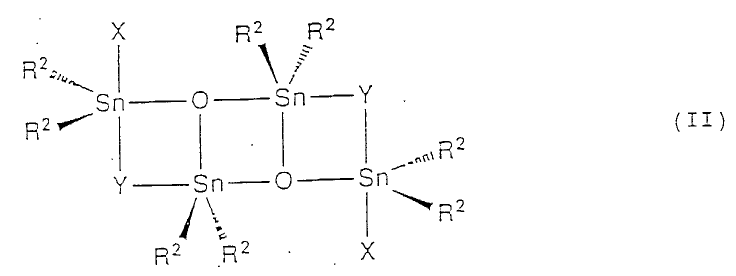 wherein R² represents either an alkyl group having from 1 to 4 carbon atoms or a phenyl group, X is selected from Cl, Br and NCS, and Y is selected from Cl, Br, NCS, OH, an alkoxy group having from 1 to 4 carbon atoms and a phenoxy group.

## Patentansprüche

1. Bioabbaubares, optisch aktives statistisches Copolymer, dargestelllt durch die allgemeine Formel (l): 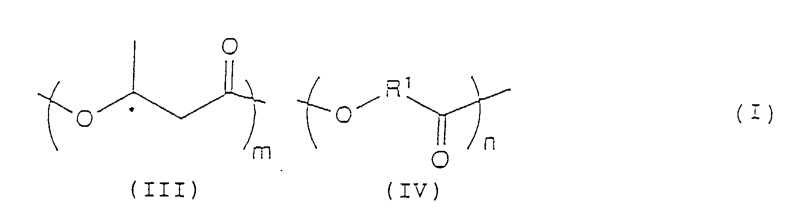 worin R¹ eine Gruppe bedeutet, ausgewählt aus Tetramethylen, Methyltetramethylen, Pentamethylen, 1,4-Dimethyl-2-oxo-3-oxytetramethylen, 2-Oxo-3-oxytetramethylen und 2-Methyl-3-oxypentamethylen und m und n bedeuten jeweils eine natürliche Zahl von 10 bis 15 000.

2. Bioabbaubares, optisch aktives Polymer nach Anspruch 1, wobei das Verhälntis der Struktureinheiten (III) zu den Struktureinheiten (IV) im Bereich von 99:1 bis 1:99 liegt.

3. Bioabbaubares, optisch aktives Polymer nach Anspruch 1 oder 2, das ein gewichtsbezogenes durchschnittliches Molekulargewicht von 8000 bis 1 000 000 aufweist.

4. Verfahren zur Herstellung des bioabbaubaren, optisch aktiven Polymers nach Anspruch 1, 2 oder 3, wobei optisch aktives β-Butyrolacton und ein 6- oder 7-gliedriges Lacton einer Ringöffnungs-Copolymerisation in Gegenwart eines Katalysators unterzogen werden.

5. Verfahren nach Anspruch 4, wobei der Katalysator ausgewählt ist, aus einer Zinnverbindung, einer Aluminiumverbindung, einer Zinkverbindung und einem Distannoxan-Katalysator.

6. Verfahren nach Anspruch 5, wobei der Katalysator ein Distannoxan-Katalysator ist, dargestellt durch die allgemeine Formel (II): 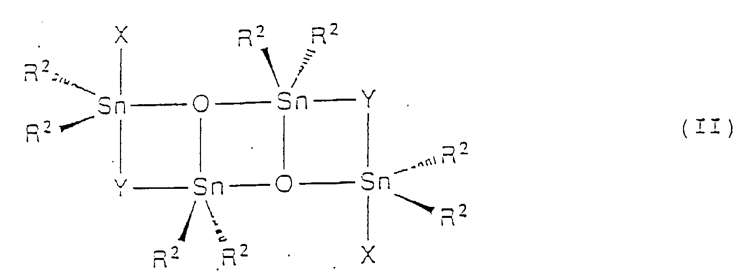 worin R² entweder eine Alkylgruppe mit 1 bis 4 Kohlenstoffatomen oder eine Phenylgruppe bedeutet, X ist ausgewählt aus Cl, Br und NCS und Y ist ausgewählt aus Cl, Br, NCS, OH, einer Alkoxygruppe mit 1 bis 4 Kohlenstoffatomen und einer Phenoxygruppe.

## Revendications

1. Copolymère statistique biodégradable optiquement actif représenté par la formule (I) générale : 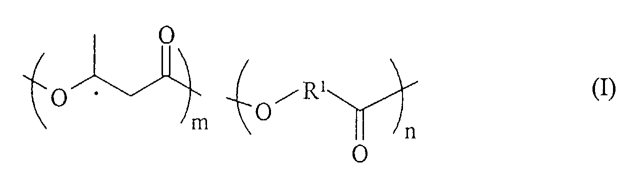 dans laquelle R¹ représente un groupe choisi parmi le tétraméthylène, le méthyltétraméthylène, le pentaméthylène, le 1,4-diméthyl-2-oxo-3-oxytétraméthylène, le 2-oxo-3-oxytétraméthylène et le 2-méthyl-3-oxypentaméthylène et m et n représentent chacun un nombre entier de 10 à 15 000.

2. Polymère biodégradable optiquement actif selon la revendication 1, dans lequel le rapport des unités structurelles (III) aux unités structurelles (IV) se trouve dans l'intervalle de 99:1 à 1:99.

3. Polymère biodégradable optiquement actif selon la revendication 1 ou 2 qui a un poids moléculaire moyen en poids de 8 000 à 1 000 000.

4. Procédé de production du polymère biodégradable optiquement actif selon la revendication 1, 2 ou 3 qui comprend l'étape consistant à soumettre de la β-butyrolactone optiquement active et une lactone hexa- ou hepta-gonale à une copolymérisation par ouverture de cycle en présence d'un catalyseur.

5. Procédé selon la revendication 4, dans lequel le catalyseur est choisi parmi un composé d'étain, un composé d'aluminium, un composé de zinc et un catalyseur de distannoxane.

6. Procédé selon la revendication 5, dans lequel le catalyseur est un catalyseur de distannoxane représenté par la formule (II) générale : 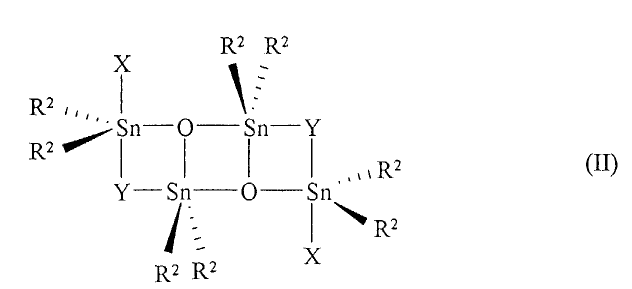 dans laquelle R² représente soit un groupe alkyle ayant de 1 à 4 atomes de carbone, soit un groupe phényle, X est choisi parmi Cl, Br et NCS et Y est choisi parmi Cl, Br, NCS, OH, un groupe alcoxy ayant de 1 à 4 atomes de carbone et un groupe phénoxy.
